# EUROPÄISCHE PATENTSCHRIFT

(11) **EP 3 825 025 B1**
(45) Veröffentlichungstag und Bekanntmachung des Hinweises auf die Patenterteilung: **07.06.2023**
(21) Anmeldenummer: 20200016.2
(22) Anmeldetag: 05.10.2020
(51) Int. Cl.: B21D 31/04, B21D 53/80, B21D 53/88

(54) **STRECKMETALL FÜR KFZ-INNENAUSSTATTUNGSTEILE**
EXPANDED METAL FOR MOTOR VEHICLE INTERIORS
MÉTAL ÉTIRÉ POUR LES PIÈCES D'ÉQUIPEMENT INTÉRIEUR DE VÉHICULE À MOTEUR

(30) Priorität: 21.11.2019 DE 102019131399
(43) Veröffentlichungstag der Anmeldung: 26.05.2021
(73) Patentinhaber: GRAMMER Interior Components GmbH, 74736 Hardheim (DE)
(72) Erfinder: Link, Manfred, 69427 Mudau-Reisenbach (DE); Türk, Ralf, 74731 Walldürn (DE)
(74) Vertreter: Ostriga Sonnet Wirths & Vorwerk

(56) Entgegenhaltungen:
- WO-A1-99/06248
- DE-A1-102006 001 721
- DE-A1-102017 126 315
- JP-A- S 516 857
- US-A1- 2011 061 436

## Beschreibung

Die Erfindung betrifft ein KFZ-Innenausstattungsteil aus Streckmetall, mit den Merkmalen des Oberbegriffs des Anspruchs 1 und des Anspruchs 4. Streckmetalle sind aus dem Stand der Technik hinlänglich bekannt. Als Beispiel kann hier die DE 10 2005 002 017 A1 genannt werden, die neben einem Streckmetall darüber hinaus eine mit bestimmten technischen Merkmalen ausgestattete Vorrichtung zur Fertigung von Streckmetallen offenbart.

Bei Streckmetallen handelt es sich um Blechbögen, die durch spanlose Bearbeitung mit in etwa rautenförmigen Öffnungen versehen werden. Hierzu wird ein Blechbogen in Vorschubrichtung zwischen einem fest stehenden und einem sich auf und ab bewegenden Messer hindurchgeführt. Eines der Messer, in der Regel das bewegliche Messer, ist mit einer zahnartigen Kontur ausgestattet. Die Messerzähne stechen in das Metall ein und verdrängen Metallabschnitte. Dabei alterniert das bewegliche Messer quer zur Vorschubrichtung zwischen zwei Eintauchpositionen. Infolgedessen entstehen rautenförmige Öffnungen.

Je nach Ausbildung des Streckmessers wird der Metallbogen durch die Bearbeitung in Vorschubrichtung, horizontal zur Vorschubrichtung, gleichbedeutend mit quer zur Vorschubrichtung, oder vertikal zur Vorschubrichtung bzw. in Messereintauchrichtung oder in beide Richtungen gleichzeitig, gestreckt und erfährt so in die jeweilige Richtung eine Dimensionsänderung.

Streckmetall findet in vielerlei Bereichen Anwendung, unter anderem in der Bauindustrie, jedoch auch im Gartenbau und zunehmend auch für Innenausstattungsteile in der Automobilbranche.

EP 2 073 999 B1 und US 2011/0061436 A1 zeigen ein Streckmetall zur Fertigung von Hohlzylindrischen Filtern, wie sie beispielsweise zur Reinigung von Schmier- und Kraftstoffen im Fahrzeugbau Verwendung finden. Diese bestehen aus einem in mehreren Lagen übereinander gewickelten Streckmetallbogen. Bei der Herstellung solcher Filter muss es jedoch vermieden werden, dass die Öffnungen zweier Lagen miteinander fluchten. Deshalb schlagen beide Veröffentlichungen vor, die Weite der Maschenöffnungen im Streckmetallbogen zu variieren.

Ebenso zeigt die WO 99/06248 A1 einen gewickelten Streckmetallbogen zum Einsatz in einem Filter für Gasgeneratoren. Auch hier wird vorgeschlagen, die Größe der einzelnen Öffnungen zu variieren, um über die Windungen der Bögen fluchtende Öffnungen zu vermeiden.

Die Erfindung ist insbesondere auf die Streckmetallfertigung für Innenausstattungsteile von Automobilen gerichtet. Eine Anwendung solcher Streckmetalle ist beispielsweise die Abdeckung von Luftausströmöffnungen für Fahrzeugbelüftungssysteme, insbesondere für Defrostersysteme von Windschutzscheiben. Hierzu wird auf die anmeldereigene DE 10 2017 126 315, auf die der Oberbegriff der Patentansprüche 1 und 4 basiert, verwiesen. Diese zeigt, wie durch spezielle Zahngeometrien des Streckmessers die Öffnungsquerschnitte von Maschenöffnungen des Streckmetalls beeinflussbar sind. Hierbei werden insbesondere die Maschenformen der in Reihe nebeneinander angeordneten Streckmetallmaschen verändert, um die aus dem Belüftungssystem entweichende Luft in Ihrer Ausströmrichtung zu beeinflussen.

Aus dem Bereich der Bautechnik ist ein Streckmetall durch die DE 10 2006 001 721 bekannt, welches als Dichtstreifen für den Dachfirst dienen und im Randbereich quer zur Vorschubrichtung des Streckmetalls durch die Fertigungsanlage Maschen unterschiedlicher Breite in einer Maschenreihe aufweist.

JP S 5168 57 A zeigt ein Streckmetall, welches mit Hilfe zweier mit Abstand voneinander montierter Streckmesser gefertigt wird und deshalb ein sich konstant wiederholendes Muster von Maschen aufweist.

Aus dem druckschriftlich nicht belegbaren Stand der Technik ist es bekannt, Streckmetall zur Fertigung von Abdeckungselementen im KFZ-Innenraum zu verwenden, insbesondere für die Abdeckung von Lautsprechern. Das Streckmetall hat hier eine höherwertige Annutung als Imitatstrukturen, die in Kunststoffspritzgießteile eingebracht werden. Auch die Verwendung von Streckmetallen als Abdeckung von Armaturentafeln in Fahrzeugen wird regelmäßig im druckschriftlich nicht belegbaren Stand der Technik angesprochen.

Höchstwertige Lautsprecherabdeckungen werden derzeit durch Stanz-, Fräs- oder Ätztechnik oder durch Lasergravurtechnik in Edelstahl hergestellt. Diese Techniken ermöglichen es, variable Öffnungsstrukturen und -größen in höchst individueller Ausgestaltung zu fertigen und insbesondere für den Betrachter optisch übergangsfreie Öffnungsgrößenänderungen zu realisieren. Alles in allem ermöglichen diese Fertigungsverfahren also eine hohe Designfreiheit, die jedoch aufgrund der Materialwahl wie auch der Fertigungsverfahren selbst mit hohen Kosten verbunden sind.

Aufgabe der Erfindung ist es deshalb, ein neuartiges KFZ-Innenausstattungsteil für PKWs zu schaffen, welches optisch ansprechende Gestaltungsvarianten zeigt und vom Fertigungsaufwand wie von der Kostenstruktur zwischen Standardstreckmetallen und bearbeiteten Edelstählen angeordnet ist.

Gelöst wird die Aufgabe der Erfindung zunächst von einem Innenausstattungsteil mit den Merkmalen des Anspruches 1.

Das erfindungsgemäße Innenausstattungsteil bietet erstmals eine in Vorschubrichtung des Streckmetalls gesehene, kontinuierliche Maßveränderung der Maschenöffnungslänge und der Maschenöffnungsbreite.

Auf diese Weise entsteht ein optisch ansprechender Übergang zwischen offenen Bereichen und geschlossenen Bereichen. Solchermaßen gestaltete KFZ-Innenausstattungsteile, beispielsweise in Form von Lautsprecherabdeckungen oder beispielsweise auch die Abdeckung von Armaturentafelfahrzeugen ermöglichen es, funktionsbedingt mit Öffnungen versehene Bereiche in glatte, geschlossene Abdeckungsbereiche übergehen zu lassen. Beispielsweise ist vorstellbar, ein Armaturenbrettes zu bilden, in welchem Lautsprecheröffnungen eingelassen sind. Das Armaturenbrett kann im Wesentlichen geschlossen, also öffnungsfrei, gehalten sein. Im Bereich der Lautsprecher sind die erforderlichen Öffnungen vorhanden. Sodann gibt es durch Anwendung der Erfindungslehre einen Übergangsbereich. Hierbei bildet das Streckmetall einen optisch kontinuierlich wirkenden Übergang zwischen geschlossenem und offenem Bereich durch eine Maßveränderung von Maschenöffnungsbreite und/oder Maschenöffnungslänge aus. Da die sich unterscheidenden Maschenöffnungsmaße durch eine Variation der Eintauchtiefe der Streckmesser erreicht werden, ist es zudem möglich, in Grenzabschnitten gar keine Öffnungen in den Metallbogen, sondern lediglich noch Prägungen einzubringen.

Der Gegenstand der Erfindung kennzeichnet sich auch dadurch, dass die Maschenöffnungsbreite und die Maschenöffnungslänge in Bahnen hintereinander angeordneter Maschen von Reihe zu Reihe eine kontinuierliche Maßveränderung zeigt, wobei die Maßdifferenzen in der Maschenöffnungsbreite und der Maschenöffnungslänge von Reihe zu Reihe derart bemessen sind, dass optisch der Eindruck sich kontinuierlich verändernder Maschenöffnungmaße erweckt ist.

Auch ist es denkbar, das eine Abdeckung zu schaffen, bei welcher durch die kontinuierliche Veränderung der Maschenöffnungslängen und Maschenöffnungsbreiten in einer im Wesentlichen ebenen oder entlang lediglich einer Radius gekrümmten Fläche ein optischer Welleneffekt erzeugt ist.

Diese Merkmale gewährleisten eine möglichst harmonische Ansicht des Innenausstattungsteils.

Es ist möglich, dass die Stegbreite der in Reihen nebeneinander angeordneten und der in Bahnen hintereinander angeordneten Maschen trotz Variation der Maschenöffnungsmaße konstant ist.

Alternativ ist vorgesehen, dass die Stegbreite der in Reihen nebeneinander angeordneten und in Bahnen hintereinander angeordneten Maschen gleichsam der Variation der Maschenöffnungsmaße variiert.

Beide Varianten erlauben es, bestimmte optische Effekte durch das Verhältnis von offenen zu geschlossenen Bereichen im Streckmetall zu verwirklichen.

Gelöst wird die Aufgabe der Erfindung zudem von einem KFZ-Innenausstattungsteil mit den Merkmalen des nebengeordneten Anspruches 4.

Im Übrigen sind aus der nachfolgenden Zeichnungsbeschreibung weitere Vorteile der Erfindung ersichtlich. Es zeigen:
- Figur 1: ein erfindungsgemäßes Innenausstattungsteil gefertigt aus einem Streckmetall in einer ersten Ausführungsform,
- Figur 2: das erfindungsgemäße Innenausstattungsteil gefertigt aus einem Streckmetall in einer zweiten Ausführungsform,
- Figur 3: ein erfindungsgemäßes Innenausstattungsteil gefertigt aus einem Streckmetall in einer dritten Ausführungsform,
- Figur 4: ein erfindungsgemäßes Innenausstattungsteil gefertigt aus einem Streckmetall in einer vierten Ausführungsform,

In den Figuren ist ein erfindungsgemäßes Innenausstattungsteil gefertigt aus einem Streckmetall bzw. eine erfindungsgemäße Streckmetallstruktur insgesamt mit Bezugsziffer 10 versehen.

Die Streckmetallstruktur 10 wird von einer Vielzahl von Maschen 11 gebildet. Jede Masche verfügt über eine Maschenöffnung 12, die von Maschenstegen 13, die auch im Folgenden lediglich als Stege 13 bezeichnet werden, eingefasst ist. Die die Maschenöffnungen 12 umgebenden Stege 13 sind untereinander in sogenannten Knoten 14 verbunden.

Die Streckmetallstruktur 10 wird hergestellt, indem ein Blech in Vorschubrichtung V durch eine nicht dargestellte Streckvorrichtung geführt wird. Dabei wird das Blech zwischen zwei Messern hindurch geschoben. Eines der Messer steht fest. Das andere Messer ist beweglich gehalten. Das bewegliche Messer bewegt sich einerseits vertikal auf und ab, wobei es bei jeder Bewegung nach unten mit Streckzähnen in das Blech eintaucht und Blechmaterial spanlos verdrängt. Hierdurch entstehen in der Regel rautenförmige Öffnungen im Blech.

Die Maschenöffnungen 12 bzw. die Maschen 11 sind deshalb in Reihen R nebeneinander und in Bahnen B hintereinander angeordnet. Dabei ist zu beachten, dass das bewegliche Streckmesser zwischen zwei Eintauchpositionen horizontal alternierend hin und her bewegt wird. Aus diesem Grund sind die Maschen 11 bzw. Maschenöffnungen 12 zweier hintereinander angeordneter Reihen R versetzt zueinander angeordnet.

Hieraus ergibt sich, dass die vorbeschriebenen Knoten 14 immer zwischen zwei in Bahnen B hintereinander und zwei in Reihen R nebeneinander befindlicher Maschenöffnungen 12 zu finden sind.

Eine Streckmetallstruktur 10 kann durch verschiedene Größen definiert werden. Eine Möglichkeit besteht z. B. darin, die Maschenmaße festzulegen. Dabei umfasst eine Masche 11 grundsätzlich eine Maschenöffnung 12 und die die Maschenöffnung 12 umgebenden Stegbereiche. Die Maschenlänge ML wird gemessen von Knotenmittelpunkt zu Knotenmittelpunkt zweier einander in Vorschubrichtung V gegenüberliegenden, die Maschenöffnung 12 einfassenden Knoten. Die Maschenbreite MB wird demzufolge gemessen von Knotenmittelpunkt zu Knotenmittelpunkt zweier quer zur Vorschubrichtung, also horizontal gegenüberliegenden und die Maschenöffnung 12 einfassenden Knoten 14.

Die so definierten Maschenmaße definieren jedoch nicht notwendigerweise das Verhältnis von Öffnungsfläche zu Stegfläche. Bei vorgegebenen Maschenmaßen können die Maße der Maschenöffnungen 12 bzw. der Stege 13, hier insbesondere der Stegbreite, variieren. Dabei hängt jedoch die Stegbreite von der Größe der Maschenöffnungen 12 ab. Je größer die Maschenöffnung 12, je schmaler die die Maschenöffnung 12 einfassenden Stege 13.

Will man die Maschenöffnungsmaße bestimmen, bietet sich hierfür unter anderem die Maschenöffnungslänge OL und die Maschenöffnungsbreite OB an. Die Maschenöffnungslänge OL wird entlang einer Strecke gemessen, die von Knotenmittelpunkt zu Knotenmittelpunkt zweier die Maschenöffnung 12 in Vorschubrichtung V einfassenden Knoten 14 verläuft. Die Maschenöffnungsbreite OB wird hingegen entlang einer Strecke gemessen, die von Knotenmittelpunkt zu Knotenmittelpunkt zweier sich quer zur Vorschubrichtung gegenüberliegenden, die Maschenöffnung 12 einfassenden Knoten 14 erstreckt.

Die Maschenöffnungsbreite OB und die Maschenöffnungslänge OL und hiermit die jeweilige Stegbreite lässt sich durch die Eintauchtiefe des Streckmessers in das Blech variieren, da die Streckmesserzähne in der Regel kegelartig ausgebildet sind. Dies hat insbesondere fertigungstechnische Gründe, da die Kegelform der Streckmesserzähne nicht nur den Kraftaufwand beim Eintauchen des Streckmessers in das Blech verringert, sondern auch das einfache Lösen des Bleches vom Streckmesser bei der Hebelbewegung des Streckmessers gewährleistet.

Die Stegbreite kann bei konstanter Maschenöffnung 12 durch die Vorschubgeschwindigkeit des Bleches durch die Streckvorrichtung variiert werden. Eine zunehmende Vorschubgeschwindigkeit führt zu einer zunehmenden Stegbreite, eine abnehmende Vorschubgeschwindigkeit führt zu einer verringerten Stegbreite.

Die Erfindung hat erkannt, dass eine Beeinflussung dieser Parameter im laufenden Streckmetallfertigungsprozess, d. h. bei kontinuierlich arbeitender Streckvorrichtung, neuartige Streckmetallstrukturen 10 hervorbringen kann, die die Verwendungsmöglichkeit des Streckmetalls für Automobilinnenausstattungsteile wie Lautsprecherabdeckungen oder Abdeckungen von Armaturentafeln ermöglicht.

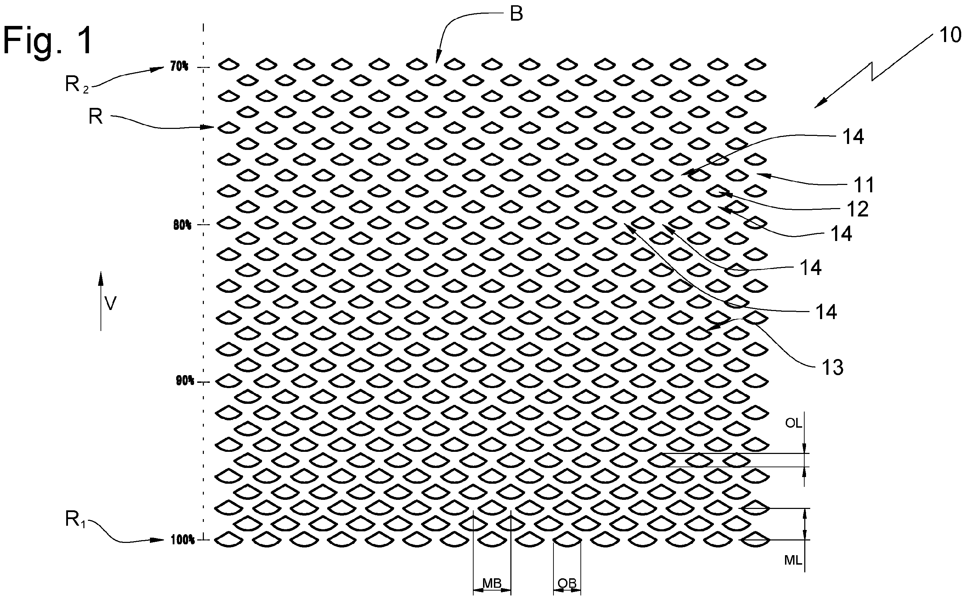

Anhand der Figuren 1 bis 4 werden nunmehr zunächst verschiedene erfindungsgemäße Innenausstattungsteile gefertigt aus Streckmetalle 10 bzw. Streckmetallstrukturen 10 beschrieben. Zudem wird auf das Fertigungsverfahren und dessen Varianten eingegangen.

Figur 1 zeigt eine Streckmetallstruktur 10 mit den Bahnen B hintereinander und Reihen R nebeneinander angeordneten Maschen 11.

Die in Vorschubrichtung V zuhinterst gelegene Maschenreihe R₁ weist das gleiche Maschenmaß, gebildet von Maschenlänge ML und Maschenbreite MB auf wie die in Vorschubrichtung V zuvorderst angeordnete Maschenreihe R₂. Es unterscheiden sich jedoch offensichtlich die Maschenöffnungsmaße der Maschenreihen R₁ und R₂. Die Öffnungsbreite OB und die Öffnungslänge OL der Öffnungen 12 in der Maschenreihe R₁ sind bedeutend größer als die Öffnungslänge OL und Öffnungsbreite OB der Maschenreihe R₂. Da die Öffnungsmaße OL, OB variieren, die Maschenmaße ML, MB jedoch konstant sind, nimmt die Stegbreite der zwischen den Maschenöffnungen 12 angeordneten Stege 13 zwischen der Maschenreihe R₁ und der Maschenreihe R₂ zu. Die Stege 13 der Maschenreihe R₂ sind bedeutend breiter als die Stege 13 der Maschenreihe R₁.

Durch die kontinuierlich kleiner werdenden Maschenöffnungen 12 zwischen der Maschenreihe R₁ und der Maschenreihe R₂ entsteht eine Streckmetallstruktur 10, welche optisch eine gleichmäßige, quasi stufenlose Verringerung der Öffnungsmaße OB, OL schafft, wodurch ein harmonisches Strukturbild entsteht.

Herstellbar ist diese Streckmetallstruktur 10 mit einem Fertigungsverfahren, bei welchem unter Beibehaltung einer konstanten Vorschubgeschwindigkeit des Metallbogens durch die Streckeinrichtung die Eintauchtiefe des Streckmessers in den Metallbogen von Maschenreihe R zu Maschenreihe R verringert wird. Im dargestellten Beispiel verringert sich der Flächenanteil der Maschenöffnungen 12 von Maschenreihe R zu Maschenreihe R um jeweils 10%. Infolgedessen ist der Messerhub des Streckmessers vor jeder Eintauchbewegung zu verringern.

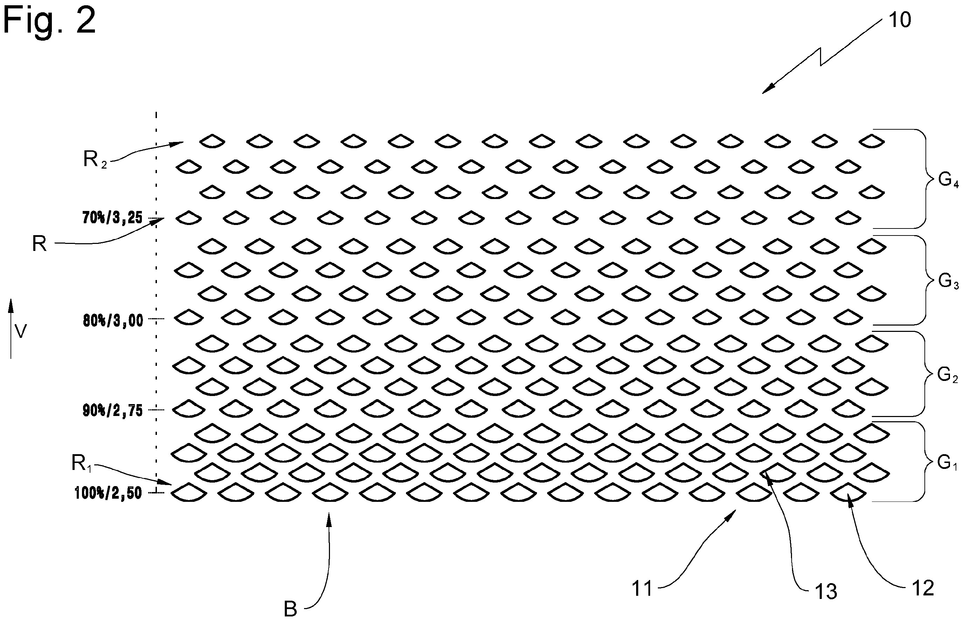

Figur 2 zeigt eine Streckmetallstruktur 10, bei welcher mehrere in Reihen R nebeneinander angeordnete und Bahnen B hintereinander angeordneten Maschen 11 bzw. bzw. Maschenöffnungen 12 gleicher Größe in Gruppen G₁, G₂, G₃ und G₄ zusammengefasst sind.

Augenscheinlich haben die Maschenöffnungen 12 der Gruppe G₁ die größten Ausmaße, die Maschenöffnungen 12 der Gruppe G₄ die kleinsten Ausmaße. Die Maße der Maschenöffnungen 12 nehmen in Vorschubrichtung V von der Gruppe G₁ hin zur Gruppe G₄ ab. Tatsächlich verringert sich die Maschenöffnungsgröße von Gruppe zu Gruppe um jeweils 10%.

Dies wird wiederum erreicht durch eine von Gruppe zu Gruppe geringer eingestellte Eintauchtiefe des Streckmessers der Streckeinrichtung.

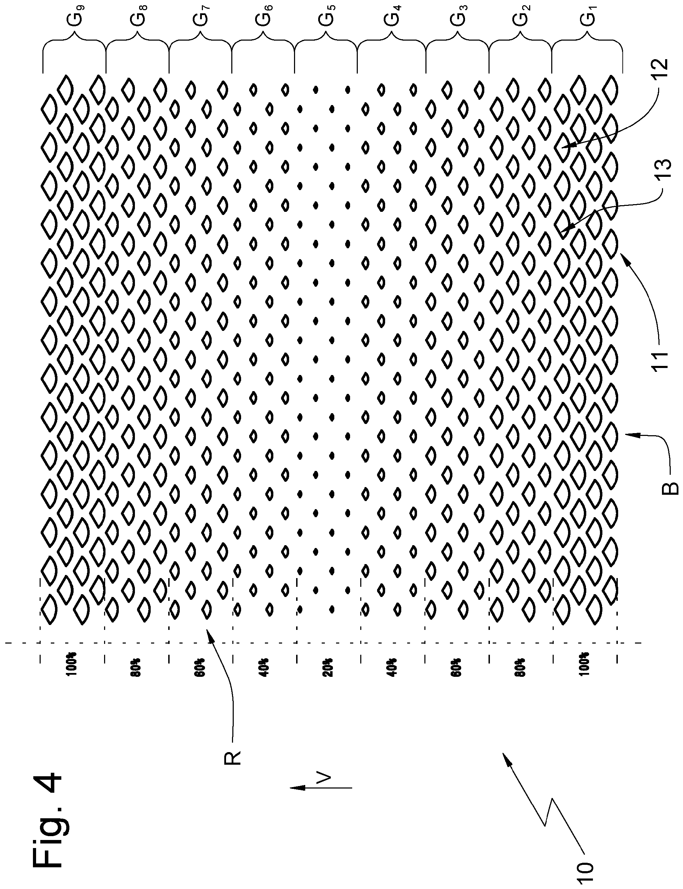

Vergleicht man die zwischen den Maschenöffnungen 12 der Reihe R₂ in Figur 1 gelegenen Stege 13 mit den zwischen den Maschenöffnungen 12 der Gruppe G₄ gelegenen Stege 13, erkennt man eine höhere Stegbreite bei gleicher Maschenöffnungsgröße. Demzufolge nimmt die Maschengröße zwischen den Gruppen G₁ und G₄ entsprechend zu. Dies wird durch eine Erhöhung der Vorschubgeschwindigkeit erreicht. Im Beispiel der Figur 4 nimmt die Vorschubgeschwindigkeit von Gruppe zu Gruppe um 10% der Ausgangsgeschwindigkeit zu.

Durch die Erhöhung der Vorschubgröße nimmt der Anteil geschlossener Streckblechflächen im Vergleich zur Herstellung von Streckblech 10 mit konstanter Vorschubgeschwindigkeit schneller zu. Infolgedessen lässt sich beispielsweise ein Übergang von technisch notwendig offenen Bereichen zu optisch erwünschten geschlossenen Bereichen über eine kürzere Distanz herstellen.

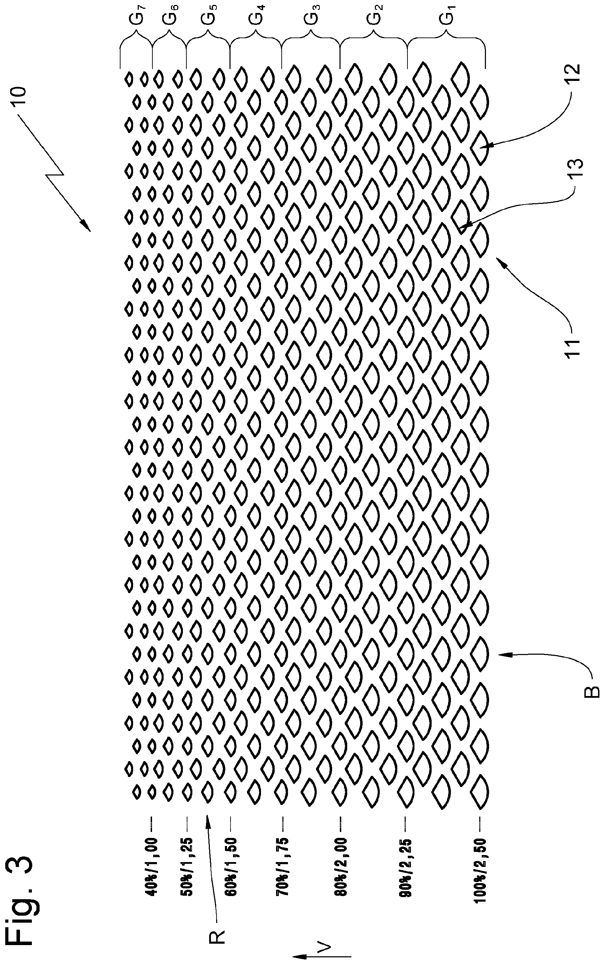

Figur 3 zeigt eine Streckmetallstruktur 10, bei der in Reihen R nebeneinander angeordnete und in Bahnen B hintereinander angeordnete Maschen 11 gleicher Größe mit Maschenöffnungen 12 gleicher Größe in Gruppen G₁ bis G₆ zusammengefasst sind. Auch hier vermindert sich die Maschenöffnungsgröße von Gruppe zu Gruppe um etwa 10%. Gleichzeitig wird mit jeder Verringerung der Maschenöffnungsgröße die Vorschubgeschwindigkeit reduziert, im konkreten Fall um jeweils 10% der Ausgangsgeschwindigkeit bei Herstellung der Maschen 11 der Gruppe G₁. Infolgedessen bleibt die Stegbreite der zwischen den Maschenöffnungen 12 angeordneten Stege 13 im Wesentlichen konstant, womit sich die Maschengröße verringert. Insgesamt entsteht hierdurch - gleiche Maschenreihenanzahl pro Maschengruppe G₁ bis G₆ - vorausgesetzt ein gedrängter optischer Eindruck bei gleichzeitig fließend erscheinender Maschenöffnungsgrößenänderung. Selbstverständlich lässt sich der optische Effekt verändern, indem die Anzahl von Maschenreihen R innerhalb einer Gruppe G₁ bis G₆ erhöht oder verringert wird.

Schließlich zeigt Figur 4 eine weitere Streckmetallstruktur 10. Auch bei dieser sind Gruppen von Reihen R mit gleich großen Maschen 11 und gleich großen Maschenöffnungen 12 gebildet, die hier mit G₁ bis G₉ bezeichnet sind. Von Gruppe zu Gruppe ist das Maschenöffnungsmaß um 20% reduziert, bis die Maschenöffnungen der Gruppe G₅ lediglich noch ein Fünftel der Fläche der Maschen der Gruppe G₁ einnehmen. Nach Reduktion der Maschenöffnungsgrößen in Vorschubrichtung V von der Maschengruppe G₁ bis G₅ erfolgt wieder eine Vergrößerung der Maschenöffnungsmaße über die Gruppen G₅ bis G₉ bis auf 100%. Hierbei verändert sich das Maschenmaß nicht, da der Vorschub in seiner Geschwindigkeit konstant bleibt.

Insgesamt zeigt die Erfindung Innenausstattungsteile gefertigt aus Streckmetalle 10 bzw.

Streckmetallstrukturen 10, die durch eine Variation der Eintauchtiefe des Streckmessers und der Vorschubgeschwindigkeit einerseits veränderte Maschenöffnungsgrößen OB, OL und andererseits veränderte Maschengrößen MB, ML aufweisen, womit sich unterschiedliche optische Effekte realisieren lassen. Insbesondere ist es möglich, durch die Variation der Maschenöffnungsgrößen MB, ML die Öffnungsbereiche relativ zu den geschlossenen Bereichen des Streckmetalls 10 zu variieren. Andererseits ist es möglich, das Verhältnis von offenen und geschlossenen Bereichen im Streckmetall 10 im Wesentlichen konstant zu halten, wenn bei verringerter oder erhöhter Eintauchtiefe die Vorschubgeschwindigkeit entsprechend angepasst wird.

### Bezugszeichenliste:

- 10: Streckmetall / Streckmetallstruktur
- 11: Masche
- 12: Maschenöffnung
- 13: Steg
- 14: Knoten

- G: Gruppe von Maschenreihen
- B: Maschenbahn
- R: Maschenreihe
- V: Vorschubrichtung
- ML: Maschenlänge
- MB: Maschenbreite
- OL: Öffnungslänge
- OB: Öffnungsbreite

## Patentansprüche

1. Innenausstattungsteil eines Kraftfahrzeuges, wie Lautsprecherabdeckung, Luftausströmerabdeckung oder Armaturentafel, gefertigt aus einem Streckmetall 10, wobei das Streckmetall 10 durch das wiederholte Einsenken eines mit Zähnen versehenen Messers in einen Metallbogen erzeugt ist, der entlang einer Vorschubrichtung V durch eine Streckvorrichtung geführt ist,
- mit einer Vielzahl von Maschen 11,
- die Maschen 11 umfassen Stege 13, die die Maschenöffnungen 12 umschließen, wobei
- die die Maschenöffnungen 12 umschließenden Stege 13 untereinander in Knoten 14 verbunden sind, wobei
- jede Masche 11 eine in Vorschubrichtung V gesehen eine Maschenöffnungslänge OL aufweist, die entlang einer sich von Knotenmittelpunkt zu Knotenmittelpunkt zweier einander in Vorschubrichtung V gegenüberliegenden Knoten 14 verlaufenden Strecke gemessen ist,
- jede Masche 11 eine quer zur Vorschubrichtung V gesehene Maschenöffnungsbreite OB aufweist, die entlang einer sich von Knotenmittelpunkt zu Knotenmittelpunkt zweier quer zur Vorschubrichtung V einander gegenüberliegenden Knoten 14 verlaufenden Strecke gemessen ist,
- die Maschen 11 quer zur Vorschubrichtung in Reihen R nebeneinander und parallel zur Vorschubrichtung in Bahnen B hintereinander angeordnet sind,
**dadurch gekennzeichnet, dass**
- über zumindest einen Längenabschnitt des Innenausstattungsteils hinweg die Maschenöffnungslänge OL von in Bahnen B hintereinander angeordneten Maschen 11 von Reihe R zu Reihe R eine kontinuierliche Maßveränderung zeigt, wobei die Maschenöffnungslänge OL in Reihen R nebeneinander angeordneter Maschen 11 konstant ist und
- über zumindest einen Längenabschnitt des Innenausstattungsteils hinweg die Maschenöffnungsbreite OB von in Bahnen B hintereinander angeordneten Maschen 11 von Reihe R zu Reihe R eine kontinuierliche Maßveränderung zeigt, wobei die Maschenöffnungsbreite OB in Reihen R nebeneinander angeordneter Maschen 11 konstant ist,
- die Maßdifferenzen in der Maschenöffnungsbreite OB und der Maschenöffnungslänge OL von Reihe R zu Reihe R derart bemessen sind, dass optisch der Eindruck sich kontinuierlich verändernder Maschenöffnungmaße OL, OB erweckt ist.

2. Innenausstattungsteil nach Anspruch 1, **dadurch gekennzeichnet, dass** die Stegbreite der in Reihen h nebeneinander angeordneten und der in Bahnen B hintereinander angeordneten Maschen 11 trotz Variation der Maschenöffnungsmaße OL, OB konstant ist.

3. Innenausstattungsteil nach Anspruch 1, **dadurch gekennzeichnet, dass** die Stegbreite der in Reihen R nebeneinander angeordneten und in Bahnen B hintereinander angeordneten Maschen 11 gleichsam zur Variation der Maschenöffnungsmaße OB, OL variiert.

4. Innenausstattungsteil eines Kraftfahrzeuges, wie Lautsprecherabdeckung, Luftausströmerabdeckung oder Armaturentafel, gefertigt aus einem Streckmetall 10, wobei das Streckmetall 10 durch das wiederholte Einsenken eines mit Zähnen versehenen Messers in einen Metallbogen erzeugt ist, der entlang einer Vorschubrichtung V durch eine Streckvorrichtung geführt ist,
- mit einer Vielzahl von Maschen 11,
- die Maschen 11 umfassen Stege 13, die die Maschenöffnungen 12 umschließen, wobei
- die die Maschenöffnungen 12 umschließenden Stege 13 untereinander in Knoten 14 verbunden sind, wobei
- jede Masche 11 eine in Vorschubrichtung V gesehen eine Maschenöffnungslänge OL aufweist, die entlang einer sich von Knotenmittelpunkt zu Knotenmittelpunkt zweier einander in Vorschubrichtung V gegenüberliegenden Knoten 14 verlaufenden Strecke gemessen ist,
- jede Masche 11 eine quer zur Vorschubrichtung V gesehene Maschenöffnungsbreite OB aufweist, die entlang einer sich von Knotenmittelpunkt zu Knotenmittelpunkt zweier quer zur Vorschubrichtung V einander gegenüberliegenden Knoten 14 verlaufenden Strecke gemessen ist,
- die Maschen 11 quer zur Vorschubrichtung in Reihen R nebeneinander und parallel zur Vorschubrichtung in Bahnen B hintereinander angeordnet sind,
**dadurch gekennzeichnet, dass**
- über zumindest einen Längenabschnitt des Innenausstattungsteils hinweg die Maschenöffnungslänge OL von in Bahnen B hintereinander angeordneten Maschen 11 eine kontinuierliche Maßveränderung zeigt, wobei die Maschenöffnungslänge OL in Reihen R nebeneinander angeordneter Maschen 11 konstant ist und
- über zumindest einen Längenabschnitt des Innenausstattungsteils hinweg die Maschenöffnungsbreite OB von in Bahnen B hintereinander angeordneten Maschen 11 eine kontinuierliche Maßveränderung zeigt, wobei die Maschenöffnungsbreite OB in Reihen R nebeneinander angeordneter Maschen 11 konstant ist,
- die Maschen 11 von in Vorschubrichtung V aufeinander folgenden Maschenreihen R Gruppen G bilden, wobei die Maschenöffnungsbreite OB und die Maschenöffnungslänge OL von Maschen 11 einer Gruppe G identisch sind, die Maschenöffnungsbreite OB und die Maschenöffnungslänge OL zwischen den Maschen 11 verschiedener Gruppen G jedoch variiert.

5. Innenausstattungsteil nach Anspruch 4, **dadurch gekennzeichnet, dass** die Stegbreite von Maschen 11 einer Gruppe G konstant ist, sich jedoch von Gruppe G zu Gruppe G unterscheidet.

6. Innenausstattungsteil 10 nach Anspruch 4 oder 5, **dadurch gekennzeichnet, dass** die Stegbreite von Maschen 11 unterschiedlicher Gruppen G konstant ist.

7. Innenausstattungsteil nach Anspruch 4, **dadurch gekennzeichnet, dass** die die Stegbreite von in Reihen R nebeneinander angeordneter Maschen 11 konstant ist, sich jedoch von Maschenreihe R zu Maschenreihe R innerhalb einer Gruppe G unterscheidet.

## Claims

1. Interior trim part of a motor vehicle, such as a loudspeaker cover, air outlet cover or instrument panel, made of an expanded metal 10, wherein the expanded metal 10 is generated by repeatedly sinking a knife provided with teeth into a metal sheet that is guided through an expansion device in a feeding direction V,
- having a plurality of meshes 11,
- the meshes 11 comprise links 13 that enclose the mesh openings 12, wherein
- the links 13 enclosing the mesh openings 12 are interconnected with one another in knots 14, wherein
- each mesh 11 has a mesh opening length OL as seen in the feeding direction V that is measured along a line running from knot midpoint to knot midpoint of two knots 14 opposite one another in the feeding direction V,
- each mesh 11 has a mesh opening width OB as seen transversely to the feeding direction V that is measured along a line running from knot midpoint to knot midpoint of two knots 14 located opposite one another transversely to the feeding direction V,
- the meshes 11 are arranged next to each other in rows R transversely to the feeding direction and one behind the other in columns B in parallel to the feeding direction,
**characterised in that**
- over at least a partial length of the interior trim part, the mesh opening length OL exhibits a continuous change of dimension from row R to row R of meshes 11 arranged one behind the other in columns B, wherein the mesh opening length OL in rows R of meshes 11 arranged next to one another is constant and
- over at least a partial length of the internal trim part, the mesh opening width OB of meshes 11 arranged one behind the other in columns B exhibits a continuous change of dimension from row R to row R, wherein the mesh opening width OB of meshes 11 arranged next to one another in rows R is constant,
- the differences in dimension in the mesh opening width OB and the mesh opening length OL are measured in such a way from row R to row R that the optical impression of continuously changing mesh opening dimensions OL, OB is evoked.

2. Interior trim part according to claim 1, **characterised in that** the link width of the meshes 11 arranged next to one another in rows h and behind one another in columns B is constant despite variation of the mesh opening dimensions OL, OB.

3. Interior trim part according to claim 1, **characterised in that** the link width of the meshes 11 arranged next to one another in rows R and arranged one behind the other in columns B varies just as the variation of the mesh opening dimensions OB, OL varies.

4. Interior trim part of a motor vehicle such as a loudspeaker cover, air outlet cover or instrument panel, made of an expanded metal 10, wherein the expanded metal 10 is generated by repeatedly sinking a knife provided with teeth into a metal sheet that is guided through an expansion device in a feeding direction V,
- having a plurality of meshes 11
- the meshes 11 comprise links 13 that enclose the mesh openings 12, wherein
- the links 13 enclosing the mesh openings 12 are interconnected with one another in knots 14, wherein
- each mesh 11 has a mesh opening length OL as seen in the feeding direction V that is measured along a line running from knot midpoint to knot midpoint of two knots 14 located opposite one another in the feeding direction V,
- each mesh 11 has a mesh opening width OB as seen transversely to the feeding direction V that is measured along a line running from knot midpoint to knot midpoint of two knots 14 located opposite one another transversely to the feeding direction V,
- the meshes 11 are arranged next to each other in rows R transversely to the feeding direction and behind one another in columns B in parallel to the feeding direction,
**characterised in that**
- over at least a partial length of the interior trim part, the mesh opening length OL of meshes 11 arranged one behind the other in columns B exhibits a continuous change of dimension, wherein the mesh opening length OL of meshes 11 arranged next to one another in rows R is constant and
- over at least a partial length of the interior trim part, the mesh opening width OB of meshes 11 arranged one behind the other in columns B exhibits a continuous change of dimension, wherein the mesh opening width OB of meshes 11 arranged next to one another in rows R is constant,
- the meshes 11 of mesh rows R following one after the other in the feeding direction V form groups G, wherein the mesh opening width OB and the mesh opening length OL of meshes 11 of a group G are identical, but the mesh opening width OB and the mesh opening length OL varies between the meshes 11 of different groups G.

5. Interior trim part according to claim 4, **characterised in that** the link width of meshes 11 of a group G is constant, but differs from group G to group G.

6. Interior trim part 10 according to claim 4 or 5, **characterised in that** the link width of meshes 11 of different groups G is constant.

7. Interior trim part according to claim 4, **characterised in that** the link width of meshes 11 arranged next to one another in rows R is constant, but differs from mesh row R to mesh row R within a group G.

## Revendications

1. °/ Pièce de garniture intérieure d'un véhicule à moteur, telle que coiffe de haut-parleur, coiffe de diffuseur d'air ou tableau de bord, réalisée à partir d'un métal étiré 10, ledit métal étiré 10 étant obtenu par l'enfoncement répété d'une lame pourvue de dents dans une feuille de métal guidée le long d'une direction d'avancement V par un dispositif d'étirage,
- comprenant une pluralité de mailles 11,
- les mailles 11 comportant des nervures 13 qui entourent les ouvertures de maille 12, dans laquelle
- les nervures 13 qui entourent les ouvertures de maille 12 sont reliées entre elles en noeuds 14, dans laquelle
- chaque maille 11 présente une longueur d'ouverture de maille OL, considérée dans la direction d'avancement V, qui est mesurée le long d'une distance qui s'étend de centre de noeud à centre de noeud de deux noeuds 14 opposés l'un à l'autre dans la direction d'avancement V, dans laquelle
- chaque maille 11 présente une largeur d'ouverture de maille OB, considérée transversalement à la direction d'avancement V, qui est mesurée le long d'une distance qui s'étend de centre de noeud à centre de noeud de deux noeuds 14 opposés l'un à l'autre transversalement à la direction d'avancement V, et dans laquelle
- les mailles 11 sont agencées en rangées R les unes à côté des autres transversalement à la direction d'avancement et en bandes B les unes derrière les autres parallèlement à la direction d'avancement,
**caractérisée en ce que** :
- sur au moins une section longitudinale de la pièce de garniture intérieure, la longueur d'ouverture de maille OL de mailles 11 agencées les unes derrière les autres en bandes B présente une variation de dimension continue de rangée R à rangée R, la longueur d'ouverture de maille OL de mailles 11 agencées les unes à côté des autres en rangées R étant constante,
- sur au moins une section longitudinale de la pièce de garniture intérieure, la largeur d'ouverture de maille OB de mailles 11 agencées les unes derrière les autres en bandes B présente une variation de dimension continue de rangée R à rangée R, la largeur d'ouverture de maille OB étant constante dans les rangées R de mailles 11 agencées les unes à côté des autres, et
- les différences de dimensions de la largeur d'ouverture de maille OB et de la longueur d'ouverture de maille OL de rangée R à rangée R sont telles qu'elles créent un effet d'optique suivant lequel les dimensions d'ouverture de maille OL et OB varient de façon continue.

2. °/ Pièce de garniture intérieure selon la revendication 1, **caractérisée en ce que** la largeur de l'âme des mailles 11 agencées en rangées R les unes à côté des autres et des mailles 11 agencées en bandes B les unes derrière les autres est constante en dépit de la variation des dimensions d'ouverture de maille OL et OB.

3. °/ Pièce de garniture intérieure selon la revendication 1, **caractérisée en ce que** la largeur de l'âme des mailles 11 agencées les unes à côté des autres en rangées R et les unes derrière les autres en bandes B varie en quelque sorte en fonction de la variation de la dimension d'ouverture des mailles OB et OL.

4. °/ Pièce de garniture intérieure d'un véhicule à moteur, telle que coiffe de haut-parleur, coiffe de diffuseur d'air ou tableau de bord, fabriquée à partir d'un métal étiré 10, ledit métal étiré 10 étant obtenu par l'enfoncement répété d'une lame pourvue de dents dans une feuille de métal qui est guidée le long d'une direction d'avancement V par un dispositif d'étirage,
- comprenant une pluralité de mailles 11,
- les mailles 11 comportant des nervures 13 qui entourent les ouvertures de maille 12, dans laquelle
- les nervures 13 qui entourent les ouvertures de maille 12 sont reliées entre elles en noeuds 14, dans laquelle
- chaque maille 11 présente une longueur d'ouverture de maille OL, considérée dans la direction d'avancement V, qui est mesurée le long d'une distance qui s'étend de centre de noeud à centre de noeud de deux noeuds 14 opposés l'un à l'autre dans la direction d'avancement V, dans laquelle
- chaque maille 11 présente une largeur d'ouverture de maille OB, considérée transversalement à la direction d'avancement V, qui est mesurée le long d'une distance qui s'étend de centre de noeud à centre de noeud de deux noeuds 14 opposés l'un à l'autre transversalement à la direction d'avancement V, et dans laquelle
- les mailles 11 sont agencées en rangées R les unes à côté des autres transversalement à la direction d'avancement et en bandes B les unes derrière les autres parallèlement à la direction d'avancement,
**caractérisée en ce que** :
- sur au moins une section longitudinale de la pièce de garniture intérieure, la longueur d'ouverture de maille OL de mailles 11 agencées les unes derrière les autres en bandes B présente une variation continue, la longueur d'ouverture de maille OL de mailles 11 agencées les unes à côté des autres en rangées R étant constante,
- sur au moins une section longitudinale de la pièce de garniture intérieure, la largeur d'ouverture de maille OB de mailles 11 agencées les unes derrière les autres en bandes B présente un changement de dimension continu, la largeur d'ouverture de maille OB étant constante dans des rangées R de mailles 11 agencées les unes à côté des autres, et
- les mailles 11 de rangées de mailles R agencées de façon successives dans la direction d'avancement V forment des groupes G, la largeur d'ouverture de maille OB et la longueur d'ouverture de maille OL des mailles 11 d'un groupe G étant identiques, mais la largeur d'ouverture de maille OB et la longueur d'ouverture de maille OL variant entre les mailles 11 de différents groupes G.

5. °/ Pièce de garniture intérieure selon la revendication 4, **caractérisée en ce que** la largeur de l'âme des mailles 11 d'un groupe G est constante mais diffère d'un groupe G à un autre groupe G.

6. °/ Pièce de garniture intérieure 10 selon la revendication 4 ou 5, **caractérisée en ce que** la largeur de l'âme des mailles 11 de différents groupes G est constante.

7. °/ Pièce de garniture intérieure selon la revendication 4, **caractérisée en ce que** la largeur de l'âme des mailles 11 agencées les unes à côté des autres en rangées R est constante, mais diffère d'une rangée de mailles R à une autre rangée de mailles R à l'intérieur d'un groupe G.
